Europäisches Patentamt

European Patent Office

Office européen des brevets

(19)

(11) **EP 1 434 077 A1**

(12) **EUROPEAN PATENT APPLICATION**
published in accordance with Art. 158(3) EPC

(43) Date of publication:
30.06.2004 Bulletin 2004/27

(51) Int Cl.⁷: $G02B\ 27/10$

(21) Application number: 02775284.9

(22) Date of filing: 02.10.2002

(86) International application number:
PCT/JP2002/010301

(87) International publication number:
WO 2003/032047 (17.04.2003 Gazette 2003/16)

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: 04.10.2001 JP 2001308959
29.10.2001 JP 2001331194

(71) Applicant: **Sumitomo Electric Industries, Ltd.**
**Osaka-shi, Osaka 541-0041 (JP)**

(72) Inventors:
• **SANO, Tomomi,**
**c/o Yokohama Works of Sumitomo**
**Yokohama-shi, Kanagawa 244-8588 (JP)**
• **SUGANUMA, Hiroshi,**
**c/o Yokohama Works of Sumitomo**
**Yokohama-shi, Kanagawa 244-8588 (JP)**
• **KENMOCHI, Tamoya**
**Hashimoto-shi, Wakayama 648-0054 (JP)**

(74) Representative: **HOFFMANN - EITLE**
**Patent- und Rechtsanwälte**
**Arabellastrasse 4**
**81925 München (DE)**

(54) **TEMPERATURE-COMPENSATION OPTICAL COMMUNICATION INTERFERENCE DEVICE AND OPTICAL COMMUNICATION SYSTEM**

(57)     The invention relates to a temperature-compensated optical communication interference device. The interference device includes first and second optical paths (P1, P2) and a beam splitter (123) disposed at ends of both the fist and second paths (P1, P2). A first mirror (124) is disposed at the opposite end of the first path (P1), and a second mirror (125) is disposed at the opposite end of the second path (P2). The beam splitter (123) and the first and second mirrors (124, 125) are placed on a base (126) composed of members (126a, 126b, 126c). The sign of the coefficient of linear expansion of the member (126a) is opposite to those of the other members (126b, 126c). The beam splitter (123) and the first and second mirrors (124, 125) are separately placed on the members (126a, 126b, 126c), which lowers temperature dependence of the difference between the lengths of the first and second paths.

**Fig.1**

EP 1 434 077 A1

## Description

### Technical Field

The present invention relates to an optical device configured to divide input light into two beams, thereafter let the two beams interfere with each other, and then output the recombined light.

### Background Art

The optical devices configured to divide input light into two beams, thereafter let the two beams interfere with each other, and then output the recombined light, include the known Mach-Zehnder interferometer type device and Michelson interferometer type device.

A Mach-Zehnder interferometer type optical device comprises an optical divider and an optical coupler. There are first and second optical paths provided between the optical divider and the optical coupler. When light enters an input port of this optical device, the light is divided into two beams by the optical divider. One divided beam travels on the first optical path. The other divided beam travels on the second optical path. These divided beams travel through the first optical path and through the second optical path, respectively, up to the optical coupler. The optical coupler couples these divided beams with each other. The coupled light goes out through an output port of the optical device. The transmission characteristic (the relation between wavelength and transmittance) of this optical device is dependent on the light dividing property of the optical divider and the light coupling property of the optical coupler, and further on the difference between the lengths of the first and second optical paths.

A Michelson interferometer type optical device comprises a beam splitter serving as both an optical divider and an optical coupler, and a first mirror and a second mirror. This optical device has first and second optical paths. On the first path, a beam going out from the beam splitter travels to the first mirror and the beam is reflected by the first mirror back to the beam splitter. On the second path, a beam going out from the beam splitter travels to the second mirror and the beam is reflected by the second mirror back to the beam splitter. When light enters an input port of the device, the light is divided into two beams by the beam splitter. One divided beam travels on the first optical path, that is, the forward and backward optical path between the beam splitter and the first mirror. The other divided beam travels on the second optical path, that is, the forward and backward optical path between the beam splitter and the second mirror. These divided beams travel through the first and second optical paths back to the beam splitter. The beam splitter couples these divided beams with each other and feeds the coupled light to an output port of the optical device. The transmission characteristic of this optical device from the input port to the output port is dependent on the light dividing property of the beam splitter and the difference between the lengths of the first and second optical paths.

Such interference devices can be used as optical filters with a certain loss spectrum in optical communication systems. Besides, the interference devices can also be used as interleavers to demultiplex signal light of multiple wavelengths into multi-wavelength signal light of even channels and multi-wavelength signal light of odd channels, or as interleavers to multiplex multi-wavelength signal light of even channels and multi-wavelength signal light of odd channels.

As described above, the transmission characteristic of the Mach-Zehnder interferometer type or Michelson interferometer type optical device is dependent on the path length difference between the first and second optical paths. Accordingly, in order to keep the transmission characteristic of the optical device constant, it is necessary to maintain the path length difference constant between the first and second optical paths. For this reason, the optical elements constituting the optical device are fixed on a substrate.

In the configuration wherein the optical elements are fixed on the substrate, however, the path lengths of the first and second optical paths vary independently according to expansion or constriction of the substrate with temperature change, so that the optical path length difference may change. With change in the path length difference, the optical device will also change its transmission characteristic. Thus the transmission characteristic of the optical device has temperature dependence.

In order to suppress the temperature dependence, it is also conceivable to maintain the temperature of the entire optical device constant. In this case, a temperature adjusting means is necessary in order to maintain the temperature constant. It is also necessary to provide a means for supplying power to the temperature adjusting means. Therefore, the optical device has to be constructed in larger scale.

### Disclosure of the Invention

An object of the present invention is to provide a temperature-compensated optical communication interference device with reduced temperature dependence of the transmission characteristic thereof.

A temperature-compensated optical communication interference device according to the present invention comprises: first and second ports; an optical divider for dividing light entering the first port into first and second light beams; an optical coupler for receiving the first and second beams to superpose the beams and feed the superposed light to the second port; first and second optical paths disposed between the optical divider and the optical coupler; a first optical component placed on the first optical path; a second optical component placed on the second optical path; and a substrate on which the optical divider, the optical coupler, the first optical component, and the second optical component are placed. The optical coupler and optical divider may be beam splitters. The fist and second optical components may be mirrors. The substrate has one or more members with positive coefficients of linear expansion and one or more members with negative coefficients of linear expansion. Temperature dependence of an optical path length difference between the first and second optical paths is reduced due to the difference between the signs of the coefficients of linear expansion.

The beam having passed through the first optical path and the beam having passed through the second optical path interfere with each other in the path from the optical coupler to the second port. Therefore, the transmission characteristic of the light traveling from the first port to the second port is dependent on the path length difference between the first optical path and the second optical path. The substrate includes the members with the coefficients of linear expansion having different signs. Consequently, it is possible to cancel out change in the length of the first optical path and change in the length of the second optical path with temperature change to suppress change in the path length difference. Accordingly, the interference device of the present invention has the transmission characteristic resistant to changing even when change in temperature occurs. Since a temperature adjusting means is not necessary for maintaining the temperature constant, the interference device of the present invention can be constructed in small size.

The first optical path may extend above both of the members with the positive and negative coefficients of linear expansion. The second optical path may also extend above both of the members with the positive and negative coefficients of linear expansion. At least one of the optical divider, optical coupler, first optical component and second optical component may be placed on the one or more members with positive coefficients of linear expansion, and the remainder may be placed on the one or more members with negative coefficients of linear expansion.

The interference device may constitute a Mach-Zehnder interferometer or may constitute a Michelson interferometer. The interference device can be used as an optical filter or as an interleaver in an optical communication system.

Another aspect of the invention provides an optical communication system. The optical communication system comprises a transmission path for transmitting signal light of multiple wavelengths and the foregoing interference device placed on the transmission path. Therefore, the optical communication system has reduced temperature dependence of the transmission characteristic of the signal light.

Further scope of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

**Brief Description of the Drawings**

Fig. 1 is a schematic plan view showing a configuration of interleaver 100 and optical filter 120 according to an embodiment.
Fig. 2 is a plan view showing a fixing structure of beam splitter 123.
Fig. 3 is a front view showing the fixing structure of beam splitter 123.
Fig. 4 is a side view showing the fixing structure of beam splitter 123.
Fig. 5 is a schematic illustration showing a configuration of optical communication system 1 according to an embodiment.
Fig. 6 is a schematic plan view showing a configuration of interleaver 100a and optical filter 120a according to another embodiment.

**Best Modes for Carrying Out the Invention**

Embodiments of the present invention will be described below in detail with reference to the accompanying drawings. To facilitate understanding, identical reference numerals are used, where possible, to designate identical or equivalent elements that are common to the embodiments, and, in subsequent embodiments, these elements will not be further explained.

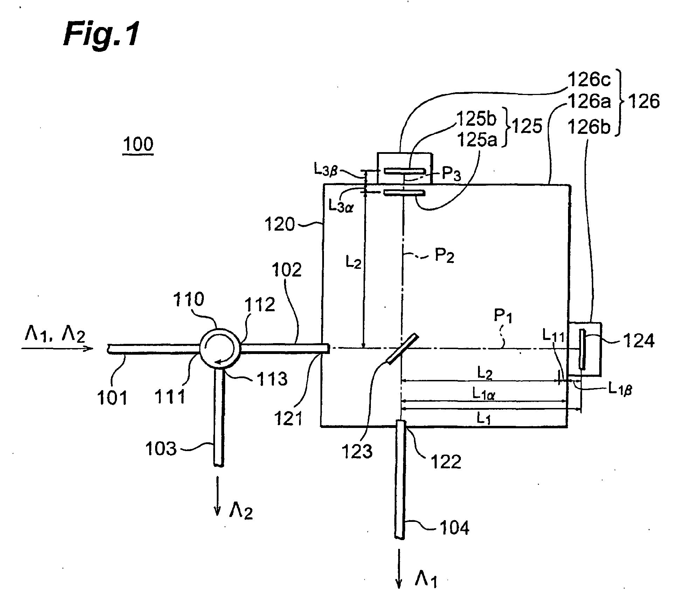

An optical filter 120 and an interleaver 100 including the filter will now be described as an embodiment of the temperature-compensated optical communication interference device according to the present invention. Fig. 1 is a schematic plan view showing a configuration of the interleaver 100 and the optical filter 120. The interleaver 100 consists of a circulator 110 and the optical filter 120.

The optical circulator 110 has a first terminal 111, a second terminal 112, and a third terminal 113. When light enters the first terminal 111 through optical fiber 101, the optical circulator 110 feeds the light through the second terminal 112 into optical fiber 102. When light enters the second terminal 112 through the optical fiber 102, the optical circulator 110 feeds the light through the third terminal 113 into optical fiber 103.

The optical filter 120 has a first port 121, a second port 122, a beam splitter 123, a first mirror 124, a second mirror 125, and a substrate 126. The first port 121 is coupled to the second terminal 112 of the optical circulator 110 through the optical fiber 102. The beam splitter 123 is, for example, a half mirror.

The first port 121, second port 122, beam splitter 123, first mirror 124, and second mirror 125 constitute a Michelson interferometer. The mirrors 124 and 125 are optical components for reflecting light. The beam splitter 123 serves as both an optical divider and an optical coupler. When the beam splitter 123 receives light from the first port 121, it divides the light into two beams. The beam splitter 123 directs one divided beam toward the first mirror 124 and directs the other divided beam toward the second mirror 125. These divided beams are reflected by the first and second mirrors 124, 125, respectively, and then return to the beam splitter 123. The beam splitter 123 divides the light reflected by the first mirror 124, into two beams, and directs one divided beam toward the first port 121 and the other divided beam toward the second port 122. The beam splitter 123 also divides the light reflected by the second mirror 125, into two beams and directs one divided beam toward the first port 121 and the other divided beam toward the second port 122.

The second mirror 125 is a Gires-Tournois resonator including a half mirror 125a with the transmittance of several ten % and a total reflection mirror 125b. The half mirror 125a and the total reflection mirror 125b are parallel to each other. The half mirror 125a reflects part of the light from the beam splitter 123 and transmits the rest part. The transmitted light travels toward the total reflection mirror 125b. The total reflection mirror 125b reflects the transmitted light toward the half mirror 125a. The half mirror 125a and the total reflection mirror 125b repeatedly reflect the light from the beam splitter 123 in this way between them. Part of this light passes through the half mirror 125a and returns to the beam splitter 123. As a result, the reflection characteristic of the second mirror 125 has wavelength dependence. The reflectance of the second mirror 125 periodically changes between 0% and 100% according to the wavelength. The period of change of reflectance (wavelength spacing) is determined by the optical distance between the half mirror 125a and the total reflection mirror 125b.

The substrate 126 is provided for fixing the first port 121, the second port 122, the beam splitter 123, the first mirror 124, and the second mirror 125 thereto. The substrate 126 has a main member 126a, a first mirror support member 126b, and a second mirror support member 126c. Coefficients of linear expansion of the respective mirror support members 126b and 126c have a sign different from that of a coefficient of linear expansion of the main member 126a. The first port 121, second port 122, beam splitter 123, and half mirror 125a are fixed on the main member 126a. The first mirror 124 is fixed on the first mirror support member 126b. The total reflection mirror 125b is fixed on the second mirror support member 126c.

Hereinafter, let the first optical path $P_1$ be an optical path in which one of the two divided beams by the beam splitter 123 travels to the first mirror 124 and then reflected thereby back to the beam splitter 123, and $L_1$ be the optical path length between the beam splitter 123 and the first mirror 124. Furthermore, let the second optical path $P_2$ be an optical path in which the other of the two divided beams by the beam splitter 123 travels to the second mirror 125 and then reflected thereby back to the beam splitter 123, and $L_2$ be the optical path length between the beam splitter 123 and the half mirror 125a. The beam splitter 123 is positioned at one end of the first optical path $P_1$ and the first mirror 124 at the other end thereof. The beam splitter 123 is positioned at one end of the second optical path $P_2$ and the second mirror 125 at the other end thereof. In the present embodiment, $L_1 > L_2$. In addition, let $\alpha$ be the coefficient of linear expansion of the main member 126a, $\beta_1$ be the coefficient of linear expansion of the first mirror support member 126b, and $\beta_2$ be the coefficient of linear expansion of the second mirror support member 126c. The signs of $\alpha$ and $\beta_1$ are different. The signs of $\alpha$ and $\beta_2$ are also different. The signs of $\beta_1$ and $\beta_2$ are the same.

With respect to the first optical path $P_1$, the part extending along the optical path length $L_{1\alpha} = (L_2 + L_{11})$ from the beam splitter 123 is located above the main member 126a, and the rest part with the path length $L_{1\beta}$ above the first mirror support member 126b. As for the second optical path $P_2$ on the other hand, the whole part with the path length $L_2$ is located above the main member 126a.

The sizes of the main member 126a and the mirror support member 126b are preferably determined so as to satisfy the following relations.

$$L_1 = L_2 + L_{11} + L_{1\beta} \tag{1a}$$

$$\alpha \cdot L_{11} + \beta_1 \cdot L_{1\beta} = 0 \qquad (1b)$$

If the temperature changes by $\Delta T$, the length of the first optical path $P_1$ will change from initial $L_1$ to the following $L_1'$ :

$$L_1' = (L_2 + L_{11})(1 + \alpha \Delta T) + L_{1\beta}(1 + \beta_1 \Delta T) \qquad (2)$$

On the other hand, if the temperature changes by $\Delta T$, the length of the second optical path $P_2$ will change from initial $L_2$ to the following $L_2'$:

$$L_2' = L_2(1 + \alpha \Delta T) \qquad (3)$$

Therefore, the optical path length difference $\Delta L'$ with the change of temperature by $\Delta T$ is expressed by the following equation in consideration of above Eqs (1a) and (1b):

$$
\begin{aligned}
\Delta L' &= L_1' - L_2' \\
&= L_{11}(1 + \alpha \Delta T) + L_{1\beta}(1 + \beta_1 \Delta T) \\
&= L_{11} + L_{1\beta} + (\alpha \cdot L_{11} + \beta_1 \cdot L_{1\beta})\Delta T \\
&= L_{11} + L_{1\beta} \\
&= L_1 - L_2 \qquad (4)
\end{aligned}
$$

This is equal to the optical path length difference before the change of temperature. Thus the temperature dependence of the optical path length difference between the first and second paths $P_1$ and $P_2$ is reduced due to the difference in the signs of the coefficients of linear expansion between the main member 126a and the first mirror support member 126b.

More generally, the sizes of the main member 126a and the mirror support member 126b are preferably determined so as to satisfy the following relations.

$$L_1 = L_{1\alpha} + L_{1\beta} \qquad (5a)$$

$$(L_{1\alpha} - L_2) \cdot \alpha + L_{1\beta} \cdot \beta_1 = 0 \qquad (5b)$$

In these equations, $L_{1\alpha}$ represents the optical path length of the part located above the main member 126a in the first optical path $P_1$, and $L_{1\beta}$ the optical path length of the part located above the first mirror support member 126b in the first optical path $P_1$.

If the temperature changes by $\Delta T$, the length of the first optical path $P_1$ will change from initial $L_1$ to the following $L_1'$:

$$L_1' = L_{1\alpha}(1 + \alpha \Delta T) + L_{1\beta}(1 + \beta_1 \Delta T) \qquad (6)$$

On the other hand, if the temperature changes by $\Delta T$, the length of the second optical path $P_2$ will change from initial $L_2$ to the following $L_2'$:

$$L_2' = L_2(1 + \alpha \Delta T) \qquad (7)$$

Accordingly, the optical path length difference $\Delta L'$ with the change of temperature by $\Delta T$ is expressed by the following equation in consideration of above Eqs (5a) and (5b):

$$
\begin{aligned}
\Delta L' &= |L_1' - L_2'| \\
&= |L_{1\alpha}(1 + \alpha\Delta T) + L_{1\beta}(1 + \beta_1\Delta T) - L_2(1 + \alpha\Delta T)| \\
&= |(L_{1\alpha} - L_2)(1 + \alpha\Delta T) + L_{1\beta}(1 + \beta_1\Delta T)| \\
&= |(L_{1\alpha} + L_{1\beta} - L_2) + [(L_{1\alpha} - L_2)\cdot\alpha + L_{1\beta}\cdot\beta_1]\Delta T| \\
&= |L_1 - L_2| \qquad\qquad (8)
\end{aligned}
$$

This is equal to the optical path length difference before the change of temperature. When the sizes of the main member 126a and the mirror support member 126b are determined so as to satisfy Eqs (5a) and (5b) as described above, the temperature dependence of the optical path length difference between the first and second paths $P_1$ and $P_2$ is reduced. In practice, it is feasible to adequately reduce the temperature dependence of the path length difference between $P_1$ and $P_2$ if the following relation is met instead of above Eq (5b) .

$$
-0.1 \leq (L_{1\alpha} - L_2)\cdot\alpha + L_{1\beta}\cdot\beta_1 \leq 0.1 \qquad\qquad (9)
$$

With respect to the optical path $P_3$ between the half mirror 125a and the total reflection mirror 125b, the part extending along the optical path length $L_{3\alpha}$ from the half mirror 125a is located above the main member 126a, and the rest part with the path length $L_{3\beta}$ above the second mirror support member 126c. The half mirror 125a is positioned at one end of the third optical path $P_3$, and the total reflection mirror 125b at the other end thereof. The half mirror 125a is also located at one end of the second optical path $P_2$. The sizes of the main member 126a and the second mirror support member 126c are preferably determined so as to satisfy the following relation.

$$
\alpha \cdot L_{3\alpha} + \beta_2 \cdot L_{3\beta} = 0 \qquad\qquad (10)
$$

The temperature dependence of the optical path length between the half mirror 125a and the total reflection mirror 125b is reduced due to the difference in the signs of the coefficients of linear expansion between the main member 126a and the second mirror support member 126c. In practice, it is feasible to adequately reduce the temperature dependence of the optical path length between the half mirror 125a and the total reflection mirror 125b if the following relation is met instead of above Eq (10).

$$
-0.1 \leq \alpha\cdot L_{3\alpha} + \beta_2 \cdot L_{3\beta} \leq 0.1 \qquad\qquad (11)
$$

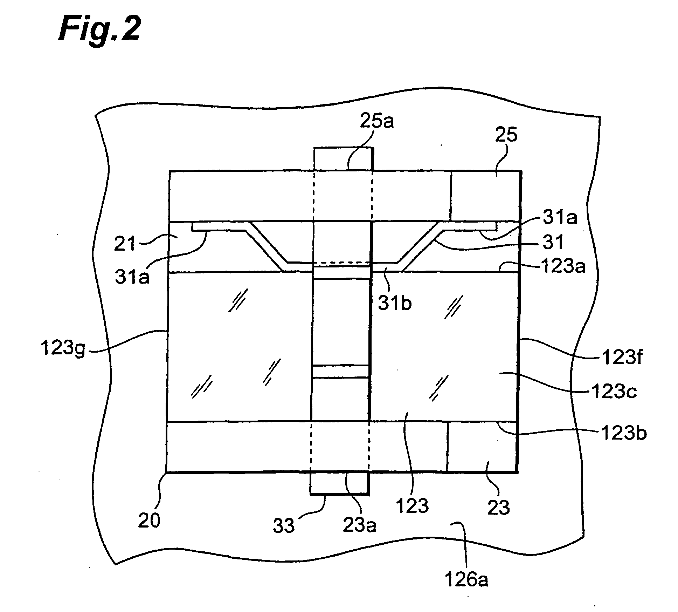

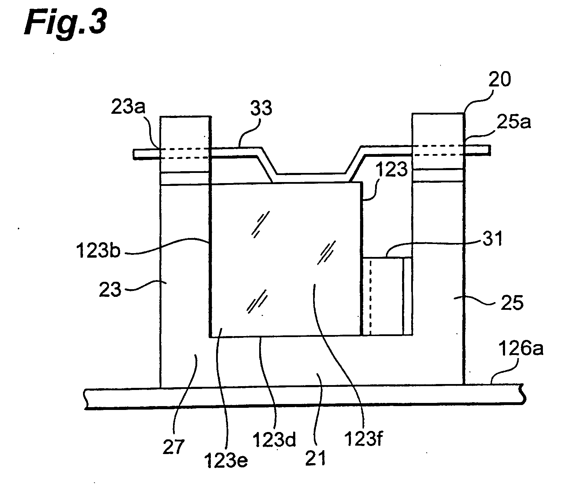

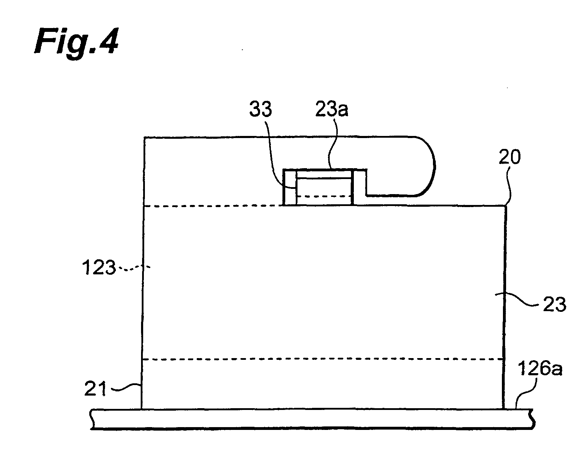

Referring to Figs. 2-4, the fixing structure for the beam splitter 123 will now be described. Figs. 2 to 4 are a plan view, a front view, and a side view showing the fixing structure. The beam splitter 123 is fixed to the main member 126a of the substrate using a housing 20 as a fixing member. In this embodiment, the beam splitter 123 is shaped in a regular quadrangular prism. It is, however, noted that the shape of the beam splitter 123 is not limited to this shape. The main member 126a is made of a metal material, e.g. stainless steel like SUS304. The housing 20 is also made of a metal material, e.g. stainless steel like SUS304. The housing 20 is joined to the main member 126a by welding. The housing 20 has a bottom portion 21, and vertical wall portions 23 and 25. The bottom portion 21 is in contact with the upper surface of the main member 126a. The vertical wall portions 23 and 25 stand upright from the both end portions of the bottom portion 21 in the direction intersecting with the substrate 126.

The angle between the bottom portion 21 and the vertical wall portion 23 is equal to the angle between two adjacent side faces of the beam splitter 123, and is 90° in this embodiment. This permits the beam splitter 123 to be positioned by placing two continuous side faces 123b and 123d of the beam splitter 123 against a corner portion 27 formed by the bottom portion 21 and the vertical wall portion 23.

In the case where the beam splitter 123 is of polygonal shape, the number of faces of the beam splitter 123 in contact with the housing 20 may be one, or three or more. In the case where the beam splitter 123 is of cylindrical shape, the beam splitter can be positioned when a portion of the peripheral part (circumferential part) of the beam splitter 123 or two points spaced from each other on the peripheral part are in contact with the housing 20.

The beam splitter 123 is fixed to the housing 20 by biasing forces of springs 31, 33 placed between the beam splitter 123 and the housing 20. The springs 31, 33 are made of a metal material, e.g. stainless steel. The springs 31, 33 are leaf springs. It can also be, however, contemplated that the springs 31, 33 are springs other than the leaf springs, e.g. coil springs.

The spring 31 is placed between one side face 123a of the beam splitter 123 and the vertical wall portion 25. The side face 123a in contact with the spring 31 is located on the opposite side of the side face 123b in contact with the vertical wall portion 23. The two ends 31a of the spring 31 are in contact with the vertical wall portion 25. The central portion 31b of the spring 31 is in contact with the side face 123a of the beam splitter to bias the beam splitter 123. The side face 123a is located on the opposite side of the face 123b of the beam splitter 123 in contact with the vertical wall portion 23. The beam splitter 123 is pressed against the vertical wall portion 23 by the biasing force of the spring 31.

The spring 33 extends between catching portions 23a and 25a provided in the respective vertical wall portions 23 and 25. The two ends of the spring 33 are caught by the catching portions 23a and 25a. The central part of the spring 33 is in contact with upper surface 123c of the beam splitter to bias the beam splitter 123. The upper surface 123c is located on the opposite side of the surface 123d of the beam splitter 123 in contact with the bottom portion 21. The beam splitter 123 is pressed against the bottom portion 21 by the biasing force of the spring 33.

Thus the beam splitter 123 is pressed against the housing 20 by the springs 31 and 33 so that the corner portion 123e thereof fits the corner portion 27 of the housing 20. This permits the beam splitter 123 to be securely fixed to the housing 20.

The biasing forces of the springs 31, 33 act on the faces except for a light receiving face 123f and light emitting face 123g of the beam splitter 123. This permits the beam splitter 123 to be fixed to the housing 20 without deteriorating the optical function of the beam splitter 123.

The biasing forces of the springs 31, 33 are set at values within the range in which the optical characteristics of the beam splitter 123 are not affected. This permits the beam splitter 123 to be fixed to the housing 20 without deteriorating the optical function of the beam splitter 123.

A method of fixing the beam splitter 123 will now be described. First, the beam splitter 123 is biased by the springs 31, 33 to be fixed to the housing 20. The spring 31 is brought into contact with the side face 123a of the beam splitter 123 and the spring 33 is brought into contact with the upper surface 123c of the beam splitter 123. This results in pressing the beam splitter 123 against the housing 20 so that the corner portion 123e of the beam splitter 123 fits the corner portion 27 of the housing 20. The beam splitter 123 is fixed to the housing 20 in this way.

Then the housing 20 with the beam splitter 123 fixed thereto is positioned on the main member 126a and thereafter the housing 20 is welded to the main member 126a. Welding is better than bonding. After the housing 20 is welded to the main member 126a, the housing 20 rarely moves even when change of temperature occurs. Therefore, the temperature dependence of the optical path lengths $L_1$, $L_2$ is suppressed. If the housing 20 were bonded contrary, an adhesive would contract with temperature change and thus the housing 20 would move. The amount of the movement must be greater than that in the case of welding. Thus the optical path lengths $L_1$, $L_2$ would be easier to change depending on the temperature if the housing 20 were bonded.

The housing 20 and the main member 126a are preferably welded with each other using a YAG laser beam. The weld time can be extremely short in the YAG laser welding operation. When they are welded by the YAG laser welding, the housing 20 moves because of impact. However, this motion is normally smaller than the motion due to curing and contraction of the resin adhesive.

The conditions for the YAG laser welding, for example, the strength of the YAG laser beams and positions at which the beams are irradiated, are properly determined according to the materials and shapes of the housing 20 and the main member 126a in consideration of the movement of the housing 20 due to the impact during the welding operation. In stead of the YAG laser welding, other laser welding such as carbon dioxide laser welding or the like may also be used.

The housing is preferably welded at least at two points by the YAG laser welding. This permits the housing 20 to be fixed more securely to the main member 126a. When the YAG laser welding is carried out at two or more points by a plurality of separate operations, it is feasible to correct the positional deviation caused by the first YAG laser welding operation by the second or later YAG laser welding operation.

In the present embodiment, the half mirror 125a is also fixed on the main member 126a using a fixing structure similar to that for the beam splitter 123. Therefore, the half mirror 125a also produces little positional deviation with the temperature change. This further suppresses the temperature dependence of the optical path length $L_2$.

The interleaver 100 operates as follows. Light propagating in the optical fiber 101 enters the first terminal 111 of the optical circulator 110 and goes out from the second terminal 112. The light travels through the optical fiber 102 and the first port 121 into the optical filter 120. The input light is divided into two beams by the beam splitter 123. One divided beam is fed into the first optical path $P_1$ and the other divided beam is fed into the second optical path $P_2$.

The beam fed into the first optical path $P_1$ by the beam splitter 123 travels forward and backward between the beam splitter 123 and the first mirror 124, and returns to the beam splitter 123 to be divided into two beams. One divided beam travels to the first port 121 and the other divided beam to the second port 122.

The beam fed into the second optical path $P_2$ by the beam splitter 123 travels forward and backward between the beam splitter 123 and the second mirror 125, and returns to the beam splitter 123 to be divided into two beams. One divided beam travels to the first port 121 and the other divided beam to the second port 122.

On the optical path between the first port 121 and the beam splitter 123, part of the light from the first optical path $P_1$ is superposed on part of the light from the second optical path $P_2$ to effect interference with each other. The superposed light travels through the first port 121 and the optical fiber 102 into the second terminal 112 of the optical circulator 110. Thereafter, the superposed light travels through the third terminal 113 into the optical fiber 103.

Likewise, on the optical path between the second port 122 and the beam splitter 123, part of the light from the first optical path $P_1$ is superposed on part of the light from the second optical path $P_2$ to effect interference with each other. The superposed light travels through the second port 122 into the optical fiber 104.

As described above, the second mirror 125 constitutes a Gires-Tournois resonator and the reflection characteristic thereof has wavelength dependence. Therefore, the interleaver 100 is able to receive and demultiplex signal light of multiple wavelengths ($\lambda_1, \lambda_2,..., \lambda_{2n-1}, \lambda_{2n},...$) from the optical fiber 101 to output signal light of a first wavelength group $\lambda_1$ ($\lambda_1, \lambda_3,..., \lambda_{2n-1},...$) into the optical fiber 104 and signal light of a second wavelength group $\lambda_2$ ($\lambda_2, \lambda_4,..., \lambda_{2n},...$) into the optical fiber 103. The wavelengths herein satisfy the relation of $\lambda_1 < \lambda_2 <...< \lambda_{2n-1} < \lambda_{2n} <...$ The wavelength spacing of the multi-wavelength signal light is determined by the optical distance between the half mirror 125a and the total reflection mirror 125b.

In the interleaver 100, as described previously, the temperature dependence of the optical path length difference ($L_{11} + L_{1\beta}$) between the first optical path $P_1$ and the second optical path $P_2$ is reduced. The temperature dependence of the optical path length ($L_{3\alpha} + L_{3\beta}$) between the half mirror 125a and the total reflection mirror 125b is also reduced. Accordingly, the temperature dependence of the transmittance is reduced for each of the light of the first wavelength group $\lambda_1$ and the light of the second wavelength group $\lambda_2$. Namely, the transmission characteristic (the relation between the wavelength and transmittance) of the interleaver 100 has reduced temperature dependence. Since there is no need for a temperature adjusting means to maintain the temperature constant, the interleaver 100 can be constructed in small size.

A specific example of the interleaver 100 according to the present embodiment will now be described. The example provides the interleaver 100 for demultiplexing multi-wavelength signal light with the frequency spacing of 100 GHz. Since the Free Spectral Range (FSR) is 100 GHz, the path length difference ($L_{11} + L_{1\beta}$) between the first optical path $P_1$ and the second optical path $P_2$ is 1.498570 mm. The main member 126a is made of stainless steel SUS304. The coefficient of linear expansion $\alpha$ of the main member 126a is $1.73 \times 10^{-5}$. The first and second mirror support members 126b, 126c are made of a ceramic material of CERSAT (trade mark) available from Nippon Electric Glass Co., Ltd. The coefficients of linear expansion thereof $\beta_1$ and $\beta_2$ are $-8.2 \times 10^{-6}$. According to the above Eq (1b), the optical path length $L_{11}$ is 0.4819 mm and the optical path length $L_{1\beta}$ 1.01667 mm.

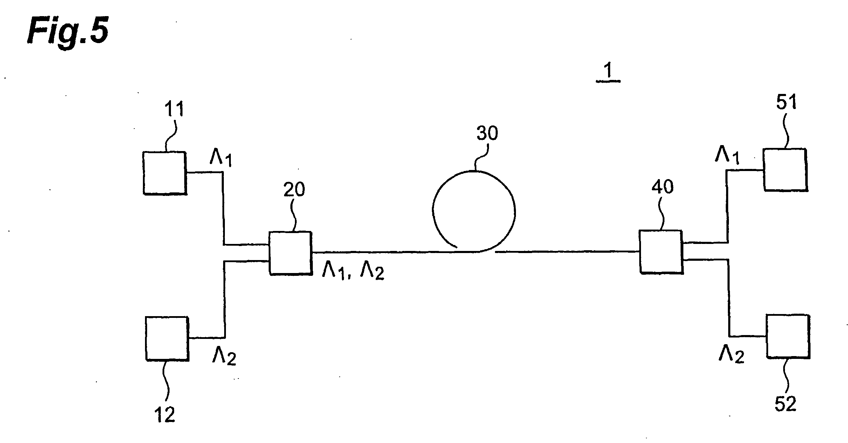

An optical communication system 1 according to the present embodiment will now be described. Fig. 5 is a schematic illustration showing a configuration of the optical communication system 1. The optical communication system 1 comprises optical transmitters 11 and 12, a multiplexing interleaver 20, an optical fiber transmission line 30, a demultiplexing interleaver 40, and optical receivers 51 and 52. The multiplexing interleaver 20 and the demultiplexing interleaver 40 have the same structure as the interleaver 100 described above. Accordingly, the temperature dependence of optical transmission characteristics of the interleavers 20 and 40 is reduced.

The optical transmitter 11 outputs multiplexed signal light of the first wavelength group $\lambda_1$ ($\lambda_1, \lambda_3,..., \lambda_{2n-1},...$). The optical transmitter 12 outputs multiplexed signal light of the second wavelength group $\lambda_2$ ($\lambda_2, \lambda_4,..., \lambda_{2n},...$). The first wavelength group $\lambda_1$ includes only odd channels, and the second wavelength group $\lambda_2$ only even channels. The multiplexing interleaver 20 receives the multi-wavelength signal light of the first wavelength group $\lambda_1$ from the optical transmitter 11 and also receives the multi-wavelength signal light of the second wavelength group $\lambda_2$ from the optical transmitter 12. The multiplexing interleaver 20 multiplexes these signal light and feeds the multiplexed light into the optical fiber transmission line 30. The demultiplexing interleaver 40 receives the multiplexed signal light through the optical fiber transmission line 30. The demultiplexing interleaver 40 demultiplexes the multiplexed signal light into the multi-wavelength signal light of the first wavelength group $\lambda_1$ and the multi-wavelength signal light of the second wavelength group $\lambda_2$. The demultiplexing interleaver 40 sends the signal light of the first wavelength group $\lambda_1$ to the optical receiver 51 and also sends the signal light of the second wavelength group $\lambda_2$ to the optical receiver 52. The optical receiver 51 demultiplexes the signal light of the first wavelength group $\lambda_1$ to individually receive signal lightwaves of the respective wavelengths included in the first wavelength group $\lambda_1$. The optical receiver 52 demultiplexes the signal light of the second wavelength group $\lambda_2$ to individually receive signal lightwaves of the respective wavelengths included in the second wavelength group $\lambda_2$.

In the optical communication system 1, as described above, the temperature dependence of the optical transmission characteristic is reduced for each of the multiplexing interleaver 20 and the demultiplexing interleaver 40. Accordingly, the temperature dependence of transmission quality of signal light is also reduced in the optical communication system 1.

The present invention is not limited to the above embodiments, but can be modified in various ways. For example, the temperature-compensated optical communication interference device according to the present invention may be any other optical component, without having to be limited to the interleaver or the optical filter. The temperature-compensated optical communication interference device according to the present invention does not always have to be the Michelson interferometer type optical device described above, but may also be, for example, a Mach-Zehnder interferometer type optical device.

In the above embodiment, the first mirror 124 and the total reflection mirror 125b are fixed on the separate members 126b and 126c, respectively. Alternatively, these mirrors 124 and 125b may be fixed on the same member.

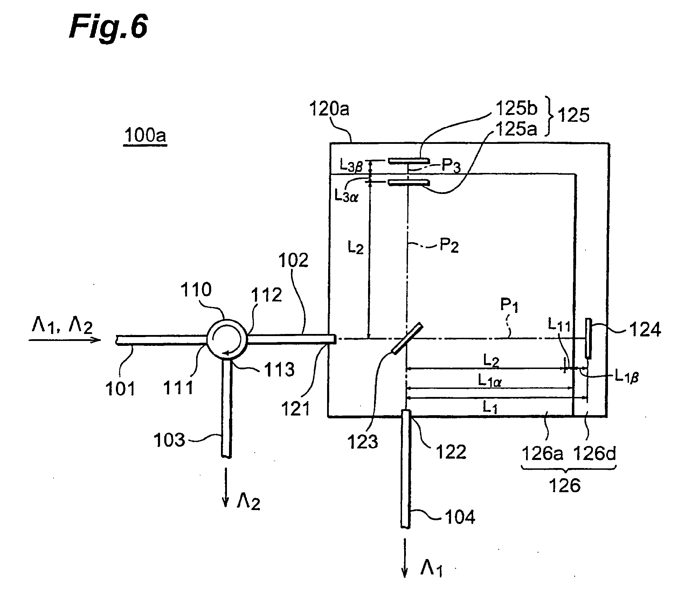

Fig. 6 is a schematic plan view showing an interleaver 100a in which the first mirror 124 and the total reflection mirror 125b are fixed on an L-shaped mirror support member 126d. The L-shaped member 126d is joined to two adjacent sides of the main member 126a. The other structure of the interleaver 100a and the optical filter 120a is the same as that of the interleaver 100 and the optical fiber 120 shown in Fig. 1. Redundant description is omitted herein accordingly.

In the following, let $\alpha$ be the coefficient of linear expansion of the main member 126a, and $\beta_3$ be the coefficient of linear expansion of the L-shaped member 126d. The signs of $\alpha$ and $\beta_3$ are different.

With respect to the first optical path $P_1$, the portion extending along the optical path length $L_{1\alpha} = (L_2 + L_{11})$ from the beam splitter 123 is located above the main member 126a, and the rest part with the optical path length $L_{1\beta}$ above the L-shaped member 126d. As for the second optical path $P_2$, on the other hand, the whole part with the optical path length $L_2$ is located above the main member 126a. With respect to the optical path $P_3$ between the half mirror 125a and the total reflection mirror 125b, the portion extending along the optical path length $L_{3\alpha}$ from the half mirror 125a is located above the main member 126a, and the rest part with the optical path length $L_{3\beta}$ above the L-shaped support member 126d.

The sizes of the main member 126a and the L-shaped member 126d are preferably determined so as to satisfy the following relations:

$$L_1 = L_{1\alpha} + L_{1\beta} \tag{11a}$$

$$(L_{1\alpha} - L_2) \cdot \alpha + L_{1\beta} \cdot \beta_3 = 0 \tag{11b}$$

$$\alpha \cdot L_{3\alpha} + \beta_3 \cdot L_{3\beta} = 0 \tag{11c}$$

Eqs (11b) and (11c) correspond to Eqs (5b) and (10) for the interleaver 100 shown in Fig. 1.

When the sizes of the main member 126a and the L-shaped member 126d are determined so as to satisfy Eqs (11a) and (11b), the temperature dependence of the optical path length difference between the first optical path $P_1$ and the second optical path $P_2$ is reduced. In practice, it is feasible to adequately reduce the temperature dependence of the optical path length difference between $P_1$ and $P_2$ if the following relation is met instead of above Eq (11b):

$$-0.1 \leq (L_{1\alpha} - L_2) \cdot \alpha + L_{1\beta} \cdot \beta_3 \leq 0.1 \tag{12}$$

When the sizes of the main member 126a and the L-shaped member 126d are determined so as to satisfy Eq (11c), the temperature dependence of the optical path length between the half mirror 125a and the total reflection mirror 125b is reduced. In practice, it is feasible to adequately reduce the temperature dependence of the optical path length between the half mirror 125a and the total reflection mirror 125b if the following relation is met instead of above Eq (11c):

$$-0.1 \leq \alpha \cdot L_{3\alpha} + \beta_3 \cdot L_{3\beta} \leq 0.1 \tag{13}$$

In the interleaver 100a, the first mirror 124 and the half mirror 125a are fixed to the single member 126d.

Therefore, the interleaver 100a can be fabricated by the smaller number of steps than the interleaver 100 in which the first mirror 124 and the half mirror 125a are separately fixed to the first and second members 126b and 126c.

In the above embodiments, the beam splitter 123 and the first mirror 124 are placed separately between the members with the coefficients of linear expansion having different signs. However, in the present invention, optical coupler, optical divider and optical components may be placed one or more members with coefficients of linear expansion having the same sign. Even in this case, it is possible to cancel out the changes, according to temperature change, in the lengths of the first and second optical paths, thereby reducing the temperature dependence of the optical path length difference between these two paths if at least one of these paths extends above both of the members with the coefficients of different signs. This is realized, for example, by placing the optical coupler, optical divider and optical components separately on the members with either positive or negative coefficients and interposing a member with the coefficient of the opposite sign between these members. Industrial Applicability

The present invention is able to cancel out the changes, according to temperature change, in the lengths of the first and second optical paths, and suppress the change in the optical path length difference. Consequently, the invention can provide the interference device with reduced temperature dependence of the transmission characteristic, and also the optical transmission system with reduced temperature dependence of the characteristic of transmitting the signal light.

**Claims**

1. A temperature-compensated optical communication interference device comprising:

   first and second ports;
   an optical divider for dividing light entering said first port into first and second light beams;
   an optical coupler for receiving the first and second light beams to superpose the beams and feed the superposed light to the second port;
   first and second optical paths disposed between said optical divider and optical coupler;
   a first optical component placed on said first optical path;
   a second optical component placed on said second optical path; and
   a substrate on which said optical divider, optical coupler, first optical component, and second optical component are placed;

   wherein said substrate has one or more members with positive coefficients of linear expansion and one or more members with negative coefficients of linear expansion, and
   wherein temperature dependence of an optical path length difference between said first and second optical paths is reduced due to the difference between the signs of the coefficients of linear expansion.

2. The interference device according to Claim 1, said interference device constituting a Michelson interferometer.

3. The interference device according to Claim 1, said interference device constituting a Mach-Zehnder interferometer.

4. The interference device according to Claim 1, wherein at least one of said optical divider, optical coupler, first optical component and second optical component is placed on said one or more members with the positive coefficients, and the remainder is placed on said one or more members with the negative coefficients.

5. The interference device according to Claim 1, wherein said optical divider and optical coupler are placed on one or more of said members with either positive or negative coefficients, and
   wherein said first optical component is placed on said member with the coefficient of the opposite sign.

6. The interference device according to Claim 1, wherein said second optical component comprises a half mirror and a total reflection mirror facing each other,
   wherein said optical divider, optical coupler, and half mirror are placed on one or more of said members with either positive or negative coefficients, and
   wherein said total reflection mirror and first optical component are placed on one or more of said members with the coefficients of the opposite sign.

7. The interference device according to Claim 1, wherein said substrate has a metal member,
   wherein a metal fixing member for fixing an optical element is welded to said metal member,

wherein a spring is attached to said fixing member,
wherein said optical element is fixed to said fixing member by a biasing force of said spring,
said interference device having at least one of said optical divider, first optical component, second optical component, and optical coupler as said optical element fixed to said fixing member.

8.  A temperature-compensated optical communication interference device comprising:

a beam splitter for dividing input light into first and second divided beams to feed the first divided beam into a first optical path and the second divided beam into a second optical path, said beam splitter being located at one end of said first optical path and being located at one end of said second optical path;
a first mirror placed at the other end of said first optical path, said first mirror being adapted to reflect said first divided beam along said first optical path back to said beam splitter;
a second mirror placed at the other end of said second optical path, said second mirror being adapted to reflect said second divided beam along said second optical path back to said beam splitter; and
a substrate on which said beam splitter, said first mirror, and said second mirror are placed;

wherein said substrate has one or more members with positive coefficients of linear expansion and one or more members with negative coefficients of linear expansion, and
wherein temperature dependence of an optical path length difference between the first and second optical paths is reduced due to the difference between the signs of the coefficients of linear expansion.

9.  The interference device according to Claim 8, wherein said beam splitter is placed on said member with either positive or negative coefficient, and
wherein said first mirror is placed on said member with the coefficient of the opposite sign.

10. The interference device according to Claim 8, wherein said beam splitter is placed on a member with a coefficient of linear expansion $\alpha$,
wherein said first mirror is placed on a member with a coefficient of linear expansion $\beta_1$,
wherein the coefficients $\alpha$ and $\beta_1$ have different signs, and
wherein the following relation is met:

$$-0.1 \le (L_{1\alpha} - L_2) \cdot \alpha + L_{1\beta} \cdot \beta_1 \le 0.1,$$

where $L_1$ is an optical path length of said first optical path, $L_2$ an optical path length of said second optical path, $L_{1\alpha}$ an optical path length of a portion of said first optical path located above the member with the coefficient $\alpha$, and $L_{1\beta}$ is an optical path length of a portion of said first optical path located above said member with the coefficient $\beta_1$.

11. The interference device according to Claim 8, wherein said second mirror is a Gires-Tournois resonator including a half mirror and a total reflection mirror facing each other,
wherein said half mirror is placed at the other end of said second optical path,
wherein said beam splitter and half mirror are placed on one or more of said members with either positive or negative coefficients, and
wherein said total reflection mirror and first mirror are placed on one or more of said members with the coefficients of the opposite sign.

12. The interference device according to Claim 8, wherein said beam splitter is placed on a member with a coefficient of linear expansion $\alpha$,
wherein said second mirror is a Gires-Tournois resonator including a half mirror and a total reflection mirror facing each other,
wherein said half mirror is placed on the member with a coefficient of linear expansion $\alpha$,
wherein said total reflection mirror is placed on a member with a coefficient of linear expansion $\beta_2$,
wherein the coefficients $\alpha$ and $\beta_2$ have different signs, and
wherein the following relation is met:

$$-0.1 \le \alpha \cdot L_{3\alpha} + \beta_2 \cdot L_{3\beta} \le 0.1,$$

where $L_{3\alpha}$ is an optical path length of a portion of an optical path between said half mirror and total reflection mirror, which is located above the member with the coefficient $\alpha$, and $L_{3\beta}$ is a length of a portion of the optical path between said half mirror and total reflection mirror, which is located above the member with the coefficient $\beta_2$.

13. The interference device according to Claim 8, wherein said substrate as a metal member,
    wherein a metal fixing member for fixing an optical element is welded to said metal member,
    wherein a spring is attached to said fixing member,
    wherein said optical element is fixed to said fixing member by a biasing force of said spring,
    said interference device having at least one of said beam splitter, first mirror, and second mirror as said optical element fixed to said fixing member.

14. The interference device according to Claim 7 or 13, wherein said fixing member has a corner portion with which at least two faces of said optical element can make contact, and
    wherein the biasing force of said spring acts so that said at least two faces of said optical element are in contact with said corner portion of said fixing member.

15. The interference device according to Claim 7 or 13, wherein the biasing force of said spring acts on a face except for a light receiving face and/or a light emitting face of said optical element.

16. The interference device according to Claim 7 or 13, wherein the biasing force of said spring has a value in a range where the optical property of said optical element is not affected.

17. The interference device according to Claim 1 or 8, wherein at least one of said first and second optical paths extends above both of said member with the positive coefficient and said member with the negative coefficient.

18. An optical communication system comprising a transmission path for transmitting signal light of multiple wavelengths and an interference device according to Claim 1 or 8, said interference device being placed on said transmission path.

EP 1 434 077 A1

# Fig.1

# Fig.2

*Fig.3*

## Fig.4

Fig.5

$\underline{1}$

11

30

51

20

$\Lambda_1$

$\Lambda_1$

40

$\Lambda_1, \Lambda_2$

12

$\Lambda_2$

$\Lambda_2$

52

EP 1 434 077 A1

### Fig.6

# INTERNATIONAL SEARCH REPORT

| | International application No. |
|---|---|
| | PCT/JP02/10301 |

**A. CLASSIFICATION OF SUBJECT MATTER**
Int.Cl$^7$ G02B27/10

According to International Patent Classification (IPC) or to both national classification and IPC

**B. FIELDS SEARCHED**

Minimum documentation searched (classification system followed by classification symbols)
Int.Cl$^7$ G02B27/10, G01B9/02

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-111831 A (Fujitsu Ltd.), 21 April, 2000 (21.04.00), Par. Nos. [0006]; Fig. 3 (Family: none) | 1-18 |
| A | US 5771097 A (Lasertec Corp.), 23 July, 1998 (23.07.98), Full text; Figs. 1 to 13 & JP 9-53910 A | 1-18 |
| A | JP 4-121605 A (Canon Inc.), 22 April, 1992 (22.04.92), Full text; Figs. 1 to 5 (Family: none) | 1-18 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 December, 2002 (03.12.02) | 17 December, 2002 (17.12.02) |

| Name and mailing address of the ISA/ | Authorized officer |
|---|---|
| Japanese Patent Office | |
| Facsimile No. | Telephone No. |

Form PCT/ISA/210 (second sheet) (July 1998)